Europäisches Patentamt

European Patent Office

Office européen des brevets

(11) Veröffentlichungsnummer: **0 457 290 A1**

# (12) EUROPÄISCHE PATENTANMELDUNG

(21) Anmeldenummer: 91107836.8

(22) Anmeldetag: 15.05.91

(51) Int. Cl.5: **C09D 17/00**, C09D 163/00

(30) Priorität: 16.05.90 DE 4015679

(43) Veröffentlichungstag der Anmeldung:
21.11.91 Patentblatt 91/47

(84) Benannte Vertragsstaaten:
AT BE CH DE DK ES FR GB GR IT LI NL SE

(71) Anmelder: **Herberts Gesellschaft mit beschränkter Haftung**
**Christbusch 25**
**W-5600 Wuppertal 2(DE)**

(72) Erfinder: **Grütter, Roland, Dr.**
**Cordulastrasse 14**
**W-5600 Wuppertal 1(DE)**
Erfinder: **Hönig, Helmut, Dr.**
**Seebachstrasse 10**
**A-8010 Graz(AT)**
Erfinder: **Kann, Wolfgang, Dr.**
**Alt Bossel 1**
**W-4322 Sprockhövel(DE)**
Erfinder: **Paar, Willibald, Dr.**
**Schanzelgasse 19**
**A-8010 Graz(AT)**
Erfinder: **Richter, Bernhard**
**Kleiner Werth 18**
**A-5600 Wuppertal 1(DE)**

(74) Vertreter: **Türk, Gille, Hrabal**
**Brucknerstrasse 20**
**W-4000 Düsseldorf 13(DE)**

(54) Verfahren zur Herstellung von lösungsmittelarmen wässrigen Pigmentpasten, die erhaltenen Pigmentpasten und deren Verwendung.

(57) Verfahren zur Herstellung von wäßrigen Pigmentpasten ohne organisches Lösemittel oder mit geringem Gehalt an organischem Lösemittel, bei dem ein Pigmentpastenharz auf der Basis eines Epoxidharzes mit einem Aromatenanteil (berechnet als Phenylengruppen) von 20 bis 70 Gew.-%, bezogen auf den Harzfestkörper, einem Zahlenmittel des Molekulargewichts ($\overline{M}n$) von 400 bis 10000, einer Hydroxylzahl von $\leq$ 150, einem Gehalt von mindestens einer Oxazolidingruppe pro Molekül und einem Gehalt an neutralisierbaren, nicht quarternisierten Aminogruppen, der nach Neutralisation mit Säure, die Wasserdispergierbarkeit oder Wasserlöslichkeit bedingt, mit einem Lösemittelgehalt von 0 bis 10 Gew.-%, bezogen auf das Epoxidharz, mit Säure zur Dispergierung oder Auflösung neutralisiert und anschließend mit Wasser versetzt wird, worauf die erhaltene Dispersion oder Lösung unter Rühren mit Pigmenten, Füllstoffen, Katalysatoren und/oder lacküblichen Hilfsstoffen im Gewichtsverhältnis 1 : 0,5 bis 1 : 11 versetzt wird und Wasser auf einen Gesamtwassergehalt von 25 bis 75 Gew.-%, bezogen auf die wäßrigen Pigmentpasten, unter Erzielung der gewünschten Mahlviskosität zugesetzt und vermahlen wird. Die erhaltenen Pigmentpasten können in wäßrigen Überzugsmitteln insbesondere für die Elektrotauchlackierung verwendet werden.

Die Erfindung betrifft wäßrige Pigmentpasten, insbesondere für die kathodische Elektrotauchlakkierung (KTL), die als Pastenformulierung besonders lösungsmittelarm sind.

Die Elektrotauchlackierung ist ein an sich bekanntes Verfahren zur Beschichtung der Oberfläche von elektrisch leitenden Objekten, um deren Korrosionsschutz zu verbessern. Das Verfahren geht dabei so vor, daß der zu beschichtende Gegenstand in ein wäßriges Beschichtungsbad getaucht wird, als Kathode an eine Gleichstromquelle angeschlossen wird, und daß dann durch den fließenden Strom der Lack auf der Werkstoffoberfläche koaguliert und abgeschieden wird. Danach wird das Material durch Erhitzen physikalisch zum Verfließen und zum chemischen Vernetzen gebracht. Es entsteht eine homogene und glatte Oberfläche auf dem Substrat.

Durch verschiedene Verfahrensparameter ist das Abscheideergebnis zu beeinflussen. So ist beispielsweise durch eine Erhöhung der Abscheidespannung die Schichtstärke zu erhöhen. Eine weitere Möglichkeit zu einer höheren Schichtstärke zu gelangen ist die Möglichkeit, den Lösemittelgehalt des Bades zu erhöhen. Dabei werden aber andere Parameter, z.B. der Umgriff, negativ beeinflußt. Deshalb ist der Lösemittelgehalt eines kathodischen Elektrotauchlackbades möglichst gering zu halten.

Ein weiterer Grund den Lösemittelgehalt gering zu halten besteht darin, daß aus einem Elektrotauchlackbad regelmäßig Ultrafiltrat entzogen und verworfen wird. Dieses Ultrafiltrat muß entsorgt werden, was erhebliche Schwierigkeiten bereitet, wenn es höhere Lösemittelanteile enthält.

Um den Lösemittelgehalt der kathodischen Elektrotauchlack-Überzugsmittel zu senken, ist frühzeitig schon auf ein Zweikomponentenverfahren übergegangen worden. Dabei wird das Lackbindemittel als wäßrige Dispersion hergestellt, die nur wenig organische Lösemittel enthält. Als zweite Komponente dient eine wäßrige Pigmentpaste, die aus Lösungen von Anreibebindemittel, Pigmenten, Neutralisationsmittel und weiteren Additiven besteht. Dabei ist es bisher allerdings notwendig, um eine günstige Pastenviskosität zu erreichen, wie um eine ausreichende Stabilität der Pigmentpaste zu erzielen, daß diesen wäßrigen Pigmentpasten erhebliche Anteile an organischen Lösemitteln zugesetzt werden. Diese werden somit auch dem Elektrotauchlackbad zugesetzt und führen zu den genannten Problemen. Die beiden Komponenten werden in getrennter Form vom Hersteller an den Verarbeiter der Elektrotauchlacke geliefert und dem kathodischen Elektrotauchlack-Becken zugegeben.

In der EP-A-0 270 877 werden selbstvernetzende neutralisierbare kathodisch abscheidbare Bindemittel zum Anreiben von Pigmentformulierungen beschrieben, die aus modifizierten Epoxidharzen bestehen, die mit Polyphenolen und Aminen umgesetzt werden und aktivierte Ester- und/oder blokkierte Isocyanatgruppen enthalten. Diese Pigmentpastenanreibebindemittel werden in den KTL-Systemen chemisch über die funktionellen Gruppen mitvernetzt. Mit diesen Bindemitteln hergestellte Pigmentpasten zeigen aber nur ein geringes Pigment-Bindemittelverhältnis. Diese Harze werden als Lösungen mit 35 % Lösemittel hergestellt.

In der EP-A-0 183 025 werden Anreibebindemittel auf Basis von Epoxidharzen mit anreagierten Oxazolidinringen beschrieben, die einen hohen Anteil von aliphatischen Strukturen aufweisen. Der Anteil an Aromaten liegt bei 0 bis 24 %. Als aliphatische Anteile werden Kohlenstoffketten mit mehr als 3 C-Atomen beschrieben, wie z.B. Fettamine, Fettsäuren und/oder Oxyalkylenketten. Diese Molekülbestandteile zeigen Vorteile in der Benetzungsfähigkeit des Harzes für die Pigmente. Ein damit verbundener Nachteil ist allerdings meist ein beeinträchtigter Korrosionsschutz. Damit ist für viele Anwendungszwecke dieses Produkt nicht geeignet. Aus diesen Harzen werden unter Zusatz von 15 % organischen Lösemitteln Pigmentpasten hergestellt, die nach dem Anreiben mit Wasser verdünnbar sind. Der Lösemittelanteil ist dadurch noch höher, daß die Harze in Lösung mit organischen Solventien vorliegen. Dadurch sind Nachteile im Beschichtungsverhalten der Elektrotauchlackbäder nicht zu vermeiden.

Die Arbeitsweise zur Herstellung von Zweikomponenten-KTL-Bädern ist z.B. in den EP-A-107 088, EP-A-107 089 oder EP-A-107 098 beschrieben. Ebenso sind dort Arbeitsweisen zur Herstellung von Pigmentpasten beschrieben. Die dort verwendeten Pigmentpastenharze sind aber auf der Basis von modifizierten Monoepoxiden mit quarternisierten Stickstoffatomen hergestellt und haben den Nachteil der geringen Spannungsfestigkeit der Lacksysteme. Ebenso wird in der EP-A-270 877 die Herstellung von Zweikomponenten-KTL-Lacken beschrieben. Dabei werden aber auch erhebliche Mengen Lösemittel mit in den Lack eingebracht. Dieser zeigt ebenfalls ungünstige Abscheideeigenschaften.

Aufgabe der Erfindung ist die Bereitstellung von wäßrigen Pigmentpasten mit verbessertem Korrosionsschutz, die für kathodische Elektrotauchlack-Überzugsmittel geeignet sind und die keine oder nur geringe Mengen an organischen Lösemitteln enthalten und dennoch eine gute Pastenstabilität, eine geringe Viskosität und eine gute Handharbarkeit ergeben.

Diese Aufgabe wird durch die Bereitstellung einer wäßrigen Pigmentpaste ohne organisches Lösemittel oder mit geringem Gehalt an organischem Lösemittel gelöst, die durch ein Verfahren hergestellt wird, bei dem ein oder mehrere wasserdispergierbare oder wasserlösliche Pigmentpastenharze auf der Basis eines Epoxidharzes mit einem Aromatenanteil (berechnet als Phenylengruppen) von 20 bis 70 Gew.-%, bezogen auf den Harzfestkörper, einem Zahlenmittel des Molekulargewichts ($\overline{M}n$) von 400 bis 10000, einer Hydroxylzahl von ≦ 150, einem Gehalt von mindestens einer Oxazolidingruppe pro Molekül und einem Gehalt an neutralisierbaren, nicht quarternisierten Aminogruppen, der nach Neutralisation mit Säure, die Wasserdispergierbarkeit oder Wasserlöslichkeit bedingt, mit einem Lösemittelgehalt von 0 bis 10 Gew.-%, bezogen auf das Epoxidharz, mit Säure zur Dispergierung oder Auflösung neutralisiert und anschließend mit Wasser versetzt werden, worauf die erhaltene Dispersion oder Lösung unter Rühren mit Pigmenten und/oder Füllstofen und/oder Katalysatoren und/oder lacküblichen Hilfsstoffen im Gewichtsverhältnis 1 : 0,5 bis 1 : 11 versetzt wird und Wasser auf einen Gesamtwassergehalt von 25 bis 75 Gew.-%, bezogen auf die wäßrigen Pigmentpasten, unter Erzielung der gewünschten Mahlviskosität zugesetzt und vermahlen wird.

Man erhält auf diese Weise wäßrige Pigmentpasten ohne organisches Lösemittel oder mit geringem Gehalt an organischem Lösemittel, enthaltend

A) ein oder mehrere wasserdispergierbare oder wasserlösliche Pigmentpastenharze auf der Basis eines Epoxidharzes mit einem Aromatenanteil (berechnet als Phenylengruppen) von 20 bis 70 Gew.-%, bezogen auf den Harzfestkörper, einem Zahlenmittel des Molekulargewichts ($\overline{M}n$) von 400 bis 10000, einer Hydroxylzahl von ≦ 150, einem Gehalt von mindestens einer Oxazolidingruppe pro Molekül und einem Gehalt an durch Säure neutralisierten, nicht quarternisierten Aminogruppen, der die Wasserdispergierbarkeit oder Wasserlöslichkeit bedingt,

B) Pigmente und/oder Füllstoffe und/oder lackübliche Hilfsstoffe, wobei die Komponenten A und B im Gewichtsverhältnis 1:0,5 bis 1:11 vorliegen, und der durch die Summe der Komponenten A und B bedingte Festkörperanteil der wäßrigen Paste 20 bis 75 Gew.-% beträgt,

C) 0 bis 5 Gew.-% Lösemittel und

D) 25 bis 75 Gew.-% Wasser, wobei sich die Prozentangaben der Komponenten C und D jeweils auf die genannte wäßrige Pigmentpaste beziehen.

Die erfindungsgemäßen wäßrigen Pigmentpasten sind trotz niedrigen Lösemittelgehalts von bis zu 5 Gew.-%, bevorzugt bis zu 2 Gew.-%, lagerstabil.

Es war nicht vorhersehbar, daß durch den erhöhten Aromatengehalt und das Nichtvorhandensein von quartären Ammoniumgruppen im Anreibebindemittel die Möglichkeit zur Herstellung von lösemittelarmen, lagerstabilen Pigmentpasten verbessert wird.

Bei den erfindungsgemäßen in den Pigmentpasten einzusetzenden Pigmentpastenharzen (Anreibebindemitteln) handelt es sich um Bindemittel auf der Basis von modifizierten Epoxidharzen mit mindestens einer, bevorzugt zwei Epoxygruppen, wobei 50 - 100 Mol% der freien Epoxygruppen mit einem primär-tertiären Diamin umgesetzt, gegebenenfalls vorher die überschüssigen Epoxygruppen mit sekundären oder primären Aminen umgesetzt sind und von 80 - 100 Mol% der sekundären Aminogruppen mit einer Carbonylverbindung zu Oxazolidinstrukturen umgesetzt sind. Diese Bindemittel können dann unter Zusatz einer Säure, z.B. einer niedermolekularen, organischen Säure in eine wäßrige Dispersion überführt werden.

Das Molekulargewicht des modifizierten Epoxidharzes soll 400 - 10000, vorzugsweise 600 - 4000, betragen. Die Hydroxylzahl soll maximal 150, beispielsweise bis zu 100 mg KOH/g betragen. Das Produkt soll einen Aromatengehalt, berechnet als Phenylengruppen, von 20 - 70 %, bevorzugt 25 - 70 %, besonders bevorzugt von 25 - 50 %, aufweisen. Dabei soll der Gehalt an organischen Lösemitteln, bei denen es sich um die Restlösemittel von der Herstellung des Harzes handelt, bei 0 bis 10 Gew.-%, z. B. 1 bis 10 Gew.-%, bevorzugt 0 bis 5 Gew.-%, z. B. 1 bis 5 Gew.-%, bezogen auf den Harzfestkörper, betragen.

Die eingesetzten Epoxidharze weisen im Mittel mindestens eine, vorzugsweise mindestens zwei Epoxygruppen pro Molekül auf. Diese Produkte können leicht hergestellt werden durch Modifizieren von Glycidylethern auf Basis von Bisphenol A oder Novolaken mit einem Epoxyäquivalentgewicht zwischen 200 und 1000. Die so erhaltenen Epoxidbausteine können durch aliphatische und/oder aromatische Brücken verknüpft werden. Beispielsweise sind (Poly)glykole, aliphatische Dicarbonsäuren, sekundäre Diamine, Polyetherdiole, (Poly)disulfide, Polycaprolactondiole oder sekundäre Diamine zur Verknüpfung möglich.

Weitere Epoxidgruppen können mit Monophenolen, wie z.B. Octyl- oder Nonylphenol umgesetzt werden. Es ist außerdem möglich, einen Teil der Epoxidgruppen mit Monocarboxylverbindungen umzusetzen. Als Monocarboxylverbindungen sind Monocarbonsäuren mit mehr als 8 C-Atomen einzusetzen, wie z.B. natürliche oder synthetische Fettsäuren, oder auch Halbester von Dicarbonsäuren mit Monoalkoholen, wie z.B. Octanol oder N-Hydroxyalkyloxazolidine. Diese Umsetzungen finden bei erhöhter Temperatur statt bis zu einer Säurezahl von weniger als 3 mg KOH/g. Bei der Herstellung der Epoxidharze wird der Anteil der aromatische Gruppen enthaltenden Bausteine so gewählt, daß sich der gewünschte Aromatengehalt ergibt.

50 - 100 % der freien Epoxidgruppen der modifizierten Harze können in Gegenwart eines inerten Lösemittels, mit einem primär-tertiären Diamin, bevorzugt N,N-Dialkylaminoalkylamine, umgesetzt werden. Die verbleibenden Epoxygruppen werden mit primären und/oder sekundären Aminen umgesetzt. Werden primäre und sekundäre Amine verwendet, so ist es bevorzugt dabei in einem ersten Reaktionsschritt die sekundären Amine umzusetzen und erst danach die primären Amine (gegebenenfalls Gemische der primären Amine) zur Reaktion zu bringen. Es sollte kein Überschuß von Aminen vorhanden sein, es sei denn, daß man die überschüssigen Amine z.B. durch Destillation im Vakuum entfernt. Als Amine sind beispielsweise Alkyl- und/oder Alkanolamine geeignet mit mehr als 4 C-Atomen. Die Reaktion der Mono- und Diamine erfolgt bevorzugt gleichzeitig. Sie kann bei erhöhter Temperatur z.B. von 70 bis 80 °C durchgeführt werden.

Die so erhaltenen sekundären $\beta$-Hydroxyalkylaminogruppen werden danach mit einer Carbonylverbindung, z.B. einer Aldehydverbindung, zu Oxazolidingruppen umgesetzt. Es sind aromatische oder aliphatische Aldehyde möglich, wie z.B. Butanal, Benzaldehyd, bevorzugt wird aber Formaldehyd verwendet. Das entstehende Reaktionswasser wird durch azeotrope Destillation entfernt. Die Anzahl der Oxazolidingruppen beträgt vorzugsweise mindestens eine pro Molekül.

Zur guten Löslichkeit muß das Bindemittel eine ausreichende Anzahl von Aminogruppen tragen. Diese sollen bevorzugt nicht quarternisiert sein, sondern erst nach Neutralisation mit einem geeigneten Neutralisationsmittel das Bindemittel in die wäßrige Phase überführen können. Durch die Art und Anzahl der Aminogruppen wird ebenfalls die Basizität des Bindemittels und des daraus herzustellenden KTL-Bades beeinflußt. Damit ist die Neutralisation und der pH-Wert zu beeinflussen.

Über die Anzahl der Hydroxylgruppen, über die Anzahl von Oxazolidingruppen, über die Anzahl von Urethangruppen kann das Verhalten der Pigmentpastenharze (Anreibebindemittel) gesteuert werden. So bewirkt eine erhöhte Anzahl von OH-Gruppen oder anderen polaren Gruppen eine bessere Wasserlöslichkeit des Harzes. Ebenso kann über die Anzahl der neutralisierbaren Aminogruppen die Löslichkeit beeinflußt werden.

Die Viskosität des Anreibebindemittels hängt stark vom erzielten Molekulargewicht ab. Um eine günstige Harz- und Pastenviskosität zu erzielen, darf das Molekulargewicht des Bindemittels nicht zu hoch sein. Andererseits führt ein zu niedriges Molekulargewicht zu einer geringen Viskosität, zu einer geringen Spannungsfestigkeit des Materials, und beeinflußt die Vernetzungsdichte im abgeschiedenen und eingebrannten Elektrotauchlackfilm stark.

Weitere Modifizierungen an dem Molekül sind über entstandene freie sekundäre OH-Gruppen möglich. Diese können beispielsweise mit Monoisocyanatverbindungen, wie verkappten Isocyanaten umgesetzt werden.

Sind noch weitere sekundäre Aminogruppen vorhanden, so reagieren diese ebenfalls mit den genannten funktionellen Gruppen. Außerdem können gegebenenfalls weitere Monoepoxidverbindungen mit diesen reaktiven OH-Gruppen reagieren.

Bei der Herstellung dieser Anreibebindemittel kann es notwendig sein, verschiedene Mengen von Lösemitteln zuzusetzen. Um zu der erfindungsgemäßen Pigmentpaste mit niedrigem Lösemittelgehalt zu kommen, kann es daher notwendig sein, diese Lösemittel zu entfernen. Das kann beispielsweise durch Destillation bei Normaldruck oder im Vakuum oder mit einer Wasserdampfdestillation geschehen. Die Lösemittel können als Gemische vorliegen oder nur als einzelnes Lösemittel. Eine Destillation kann im Verlauf der Synthese erfolgen oder am Ende vor oder nach Neutralisation der Harze mit der Säure. Wenn die Viskosität der Pastenharze gering ist, kann auf einen Lösemittelzusatz verzichtet werden. Als Lösemittel kommen solche in Frage, wie sie in der Harzherstellung üblich sind, insbesondere solche, die gegenüber Epoxidharzen oder Isocyanaten inert sind, wie aliphatische und aromatische Kohlenwasserstoffe, z.B. Xylol, Aromatengemische, dem Fachmann als Solvesso geläufig, Toluol, Ester, wie Butylacetat, Ether, Alkohole, Etheralkohole, wie Methoxypropanol und Ketone, wie Methylisobutylketon.

Ist die Viskosität der Bindemittel hoch, so ist es sinnvoll, das Harz nach Neutralisation gegebenenfalls in der Wärme in eine wäßrige Dispersion zu überführen. Gegebenenfalls ist es möglich, aus dieser wässrigen Dispersion durch azeotrope Destillation den Lösemittelgehalt zu senken.

Die so erhaltenen Pastenharze oder Pastenharzdispersionen zeigen eine gute Benetzungsfähigkeit von Pigmenten. Sie lassen ein hohes Pigment: Bindemittel-Verhältnis zu. Das Gewichtsverhältnis von Pastenharz (Harzfestkörper) zu der Summe der Gewichte von Pigmenten, Füllstoffen und lacküblichen Hilfsstoffen beträgt 1:0,5 bis 1:11.

Die erfindungsgemäßen Pigmentpasten können verschiedene, dem Fachmann bekannte Pigmente und Füllstoffe enthalten. So seien beispielsweise Aluminium- oder Magnesiumsilikat, Titandioxid, Bariumsulfat, Ruß, Glimmer feindisperse Kieselsäure, mikronisiertes Titandioxid mit einer Teilchengröße von 1 bis 100 $\mu$m, Metalleffektpigmente, Metalloxide, Interferenzpigmente, organische oder anorganische Farbpigmente, Blei- oder Chromatpigmente genannt. Über die Auswahl kann zum Beispiel das Korrosionsschutzverhalten, die Rheologie, der Farbton und das mechanische Verhalten beeinflußt werden. Als Füllstoffe können ebenfalls verschiedene bekannte Polymerpulver oder organische Mikroteilchen zugesetzt werden. Es handelt sich beispielsweise um vernetzte oder unvernetzte olefinisch polymerisierbare Polymere, wie z.B. Polyacrylnitril, (Meth)Acrylathomo- oder copolymere, Polyethylenpulver, lineare oder verzweigte Polyadditionspolymere, wie z.B. Polyamidharze oder Polyurethanharze, sowie Polykondensationsharze, wie z.B. Polyester, Triazin-Formaldehyd-Umsetzungsprodukte oder Phenolharzpulver. Mit diesen vernetzten oder unvernetzten, ionischen oder nicht ionischen, reaktiven oder nichtreaktiven Kunststoffpulvern können ebenfalls die Filmeigenschaften eingestellt werden, wie z.B. Verlauf, Steinschlagverhalten oder Dichte des Films.

Gegebenenfalls können weitere Lackadditive (lackübliche Hilfsstoffe) wie Katalysatoren, Netzmittel, Antischaummittel und/oder Verlaufsmittel zugesetzt werden.

Zur Herstellung der Pigmentpasten kann so vorgegangen werden, daß das Anreibebindemittel nach Neutralisation mit einer geeigneten Säure in die wäßrige Dispersionsphase überführt wird. Dann können die Pigmente und/oder weitere Additive zugegeben werden. Mit Wasser wird die Viskosität dieser Pigmentpaste eingestellt. Additive, die bevorzugt in organischer Phase löslich sind, können gegebenenfalls auch in dem Anreibebindemittel homogen zugemischt werden. Danach wird auf einem üblichen Mahl-Aggregat, z.B. einer Perlmühle, auf die notwendige Kornfeinheit vermahlen. Die entstehenden Pigmentpasten sind lagerstabil, dünnviskos und haben nur einen geringen Lösemittelgehalt.

Die so erhaltenen Pigmentpasten sind stabil. Sie enthalten 0 bis 5 Gew.%, bevorzugt nur 0 bis 2 Gew.% organische Lösemittel und werden in ihrer Viskosität mit Wasser eingestellt, ohne daß in weiten Grenzen des Festkörpergehalts eine Sedimentation auftritt. Die üblichen organischen Additive und Zusatzstoffe können homogen eingearbeitet werden. Es werden keine Phasenseparationen festgestellt. Der Festkörpergehalt kann bei 20 bis 75 Gew.-%, bevorzugt bei 35 bis 65 Gew-%, liegen und der Harzgehalt bevorzugt bei 3 bis 35 Gew.-%. Der Wassergehalt liegt bei 25 bis 80 Gew.%.

Diese Pigmentpasten zeichnen sich dadurch aus, daß sie einen geringen Lösemittelgehalt aufweisen, wie er aus Gründen des Umwelt- und Arbeitsschutzes gefordert wird. Die Benetzung der Pigmente ist gut und es sind lagerstabile Pasten zu erzeugen. Das Viskositätsverhalten ist gut und zeigt nur geringe strukturviskose Eigenschaften.

Aus diesen Pigmentpasten kann zusammen mit üblichen, bekannten KTL-Bindemitteln ein Elektrotauchlack-Überzugsbad hergestellt werden.

In diesem Bad können leitfähige Substrate, wie z.B Metalle, kathodisch beschichtet werden und danach eingebrannt werden. Die Beschichtungseigenschaften des Bades sind durch den geringen Lösemittelanteil günstig, d.h. es wird ein hoher Umgriff erzielt. Durch den geringen Lösemittelgehalt sind die wäßrigen Elektrotauchlackbäder auch weniger empfindlich bezüglich weiterer Additive. Als weiterer Vorteil ergibt sich, daß der Lösemittelgehalt von entstehenden Abwässern sehr gering ist.

Anhand der nachfolgenden Beispiele wird die Erfindung näher erläutert. Alle Prozentangaben beziehen sich auf Gewichtsprozent. Der Festkörper wird analog DIN 53 182 bei 150 °C bestimmt.

**Herstellung der Pastenharze:**

Beispiel 1:

950 g eines Epoxidharzes auf Basis Bisphenol A entsprechend zwei Epoxyäquivalenten werden in 633 g Xylol gelöst und bei 60 - 70 °C einem Gemisch aus 129 g 2-Ethylhexylamin und 117 g Diethylaminopropylamin zugegeben. Die Temperatur wird durch Kühlung unter 75 °C gehalten. Nach vollständigem Verbrauch aller Epoxidgruppen kommen zum Ansatz 59 g Paraformaldehyd (91 %). Die Mischung wird erwärmt, bis sich ein zügiger azeotroper Kreislauf einstellt, durch den das Reaktionswasser aus dem Ansatz entfernt wird. Nach Beendigung der Reaktion wird das im Ansatz befindliche Xylol destillativ entfernt und das Bindemittel nach Zugabe von 70 mmol Essigsäure/100 g Festharz mit deionisiertem Wasser auf einen Festkörper von 30 % verdünnt.

Das Bindemittel hat folgende Kennzahlen:
Aromatengehalt ca.
39 %
Mn ca.
1200
Restlösemittel ca.
1 %
OH-Zahl ca.
90 mg KOH/g Festharz.

Beispiel 2:

259 g eines Oxazolidins, hergestellt aus 61 g Monoethanolamin, 186 g 2-Ethylhexylglycidylether und 33 g Paraformaldehyd (91 %) werden mit 148 g Phthalsäureanhydrid bei 60 °C bis zu einer dem Halbester entsprechenden Säurezahl umgesetzt. Anschließend werden dem Ansatz 380 g eines Epoxidharzes auf Basis Bisphenol A (entsprechend zwei Epoxyäquivalenten) zugegeben und die Mischung bei 60 °C bis zum vollständigen Verbrauch aller Carboxylgruppen gehalten. Die weitere Reaktion erfolgt nach Zugabe von 200 g Toluol und 102 g Dimethylaminopropylamin mit den freien Epoxid-gruppen bei 70 - 75 °C. Anschließend werden 33 g Paraformaldehyd (33 %) zugegeben und das anfallende Reaktionswasser azeotrop entfernt. Nach Beendigung dieses Reaktionsschrittes werden 304 g eines mit 2-Ethylhexanol halbblockierten Toluylendiisocyanates zugegeben und die Mischung 1 Stunde bei 70 °C gehalten.

Die Überführung in ein lösemittelarmes Bindemittel erfolgt nach destillativer Entfernung des Toluols, Zugabe von 50 mmol Milchsäure/100 T1 Festharz und Verdünnung mit deionisiertem Wasser auf einen Festkörpergehalt von 35 %.

Kennzahlen des Bindemittels:
Aromatengehalt ca.
26 %
Mn ca.
1200
Restlösemittel ca.
1,5 %
OH-Zahl ca.
10 mg KOH/g Festharz

Beispiel 3:

400 g eines Polyoxyalkylendiamins mit einem mittleren Molgewicht von 400 werden in 1000 g Methoxypropanol mit 368 g Dodecenoxyd und 1900 g eines Epoxidharzes auf Basis von Bisphenol A (Epoxyäquivalent ca. 475) bei 100 °C bis zu einer den aktiven Aminowasserstoffen stöchiometrisch entsprechenden Menge an Epoxidgruppen umgesetzt. Anschließend erfolgt die Zugabe von 260 g Diethylaminopropylamin bei 70 °C Und Re-aktion bis zum vollständigen Verbrauch aller Epoxidgruppen. Die weitere Umsetzung erfolgt nach Zugabe von 66 g Paraformaldehyd 91 % und Methylisobutylketon als Schleppmittel durch azeotrope Entfernung des Reaktionswassers. Nach Reaktionsende wird das Gemisch Methoxypropanol/Methylisobutylketon destillativ entfernt und das Bindemittel mit 40 mmol Essigsäure/100T1 Festharz neutralisiert. Die Lösung wird mit deionisiertem Wasser auf einen Festkörpergehalt von ca. 40 % eingestellt.

Kennzahlen des Bindemittels:
Aromatengehalt ca.
32 %
Mn ca.
3000
Restlösemittel ca.
4 %
OH-Zahl ca.
150 mg KOH/g Festharz.

**Herstellung der Pigmentpasten:**

Beispiel 4:

Zu 175 g einer Pastenharzdispersion nach Beispiel 1 (30 %) werden unter einem schnellaufenden Rührer 143 g eines handelsüblichen Aluminiumsilikatpulvers, 10 g Ruß, 16 g pyrogene Kieselsäure und 8 g Dibutylzinnoxidpulver gegeben. Mit 480 g vollentsalztem Wasser wird auf ca. 44 % Festkörper eingestellt und auf einer Perlmühle vermahlen. Es entsteht eine stabile Pigmentpaste mit einem Lösemittelgehalt 1 %.

Beispiel 5:

Es werden 274 g eines Pastenharzes nach Beispiel 2 (35 % in Wasser) mit 10 g eines handelsüblichen Netzmittels (Surfynol), 25 g Bleisilikat, 355 g Aluminiumsilikat und 5 g Ruß unter einem schnellaufenden Rührwerk gemischt. Dazu werden zum Einstellen der Viskosität 340 g vollentsalztes Wasser gegeben. Es wird auf einer Perlmühle auf die nötige Kornfeinheit vermahlen, gegebenenfalls kann die Lagerviskosität noch nachträglich mit Wasser eingestellt werden. Der Lösemittelgehalt beträgt ca. 1 %.

Beispiel 6:

Es werden zu 178 g einer Harzdispersion nach Beispiel 3 mit 1 g Essigsäure (100 %), 25 g Dibutylzinnoxidpulver, 30 g Bleisilikatpulver, 5 g Ruß und 440 g Titandioxid analog Beispiel 1 gemischt und mit ca. 320 g vollentsalztem Wasser auf eine geeignete Viskosität eingestellt. Dann wird auf einer Perlmühle vermahlen. Die entstehende Pigmentpaste ist stabil und besitzt einen Lösemittelgehalt von ca. 1 %.

Herstellung von stabilen kathodisch abscheidbaren Elektrotauchbädern:

**A. Herstellung von Bindemitteldispersionen**

Beispiel 7:

Gemäß EP-12 463 werden 391 g Diethanolamin, 189 g 3-(N,N-Di-methylamino)-propylamin und 1147 g eines Adduktes aus 2 mol Hexandiamin-1,6 und ·4 mol Glycidylester der Versaticsäure (Cadura®E 10 von Shell) zu 5273 g Bisphenol A Epoxidharz (Epoxidäquivalentgewicht ca. 475) in 3000 g Ethoxypropanol gegeben. Das Reaktionsgemisch wird 4 Stunden unter Rühren bei 85 °C bis 90 °C und dann eine Stunde bei 120 °C gehalten. Anschließend wird mit Ethoxypropanol auf einen Festkörper von 60 % verdünnt.

Beispiel 8:

2262 g Epoxidharz auf Basis Bisphenol A (Epoxid-Äquivalentgewicht ca. 260) werden in 2023 g Diethylenglykoldimethylether bei 60 ° bis 70 °C gelöst und nach Zugabe von 0,8 g Hydrochinon und 2453 g eines Halbesters aus Tetrahydrophthalsäureanhydrid und Hydroxymethylmethacrylat auf 100 bis 110 °C wird so lange gehalten, bis die Säurezahl unter 3 mg KOH/g gesunken ist. Dann wird das Reaktionsprodukt mit 3262 g einer 70 %igen Lösung eines Monoisocyanats aus Toluylendiisocyanat und Dimethyl-ethanolamin (Molverhältnis 1:1) in Diethylenglykol-dimethylether umgesetzt bis zum NCO-Wert von null.

Beispiel 9:

Es werden 228 Teile Bisphenol A (1 mol) mit 260 Teilen Diethylaminopropylamin (2 mol) und 66 Teilen Paraformaldehyd (91 % 2 mol) in Gegenwart von 131 Teilen Toluol als Azeotropschleppmittel bis zur Abtrennung von 42 Teilen Reaktionswasser umgesetzt. Nach Addition von 152 Teilen Diethylenglykoldimethylether und Kühlen des Produktes auf 30 °C werden innerhalb von 45 min 608 Teile (2 mol) eines mit 2-Ethylhexanol halbblockierten Toluylendiisocyanats zugegeben. Nach Erreichen eines NCO-Wertes von praktisch Null werden 1400 Teile dieser Lösung mit einer Lösung von 190 Teilen eines Epoxidharzes auf Basis von Bisphenol A (Epoxidäquivalentgewicht ca. 190) und 250 Teilen (1 mol) eines Glycidylesters einer gesättigten tertiären $C_9$ bis $C_{11}$ Monocarbonsäure in 389 Teilen Diethylenglykoldimethylether versetzt und bei 95° bis 100 °C bis zu einem Epoxidwert von Null umgesetzt. Das Bindemittel ist nach Zusatz von 40 mmol / 100 g Fk Ameisensäure (50 %) gut in Wasser zu lösen. Es wird ein Festkörper von 35 % eingestellt.

Beispiel 10:

768 g Trimellithsäureanhydrid und 2000 g eines Glycidylesters einer verzweigten, tertiären $C_{10}$-Monocarbonsäure (Cadura®E 10) werden vorsichtig unter Rühren auf 190 °C erhitzt, wobei ab 90 °C eine exotherme Reaktion beginnt. Das Reaktionsgut wird auf 140 °C gekühlt und mit 2,75 g N,N-Dimethylbenzylamin versetzt. Das Reaktionsgut wird auf 145 °C gehalten bis eine Säurezahl unter 3 mg KOH/g erreicht wird. Wenn nötig, wird eine berechnete Menge Cadura®E 10 zusätzlich zugeben. Das Umsetzungsprodukt wird mit 2-Butoxyethanol auf 80 % Festkörper verdünnt.

Beispiel 11:

Zu 431 g einer Lösung (75 % in Ethylacetat) eines Umsetzungsproduktes aus 3 mol Toluylendiisocyanat mit 1 mol Trimethylolpropan (Desmodur L®) werden bei 70 °C langsam unter Rühren 160 g Caprolactam zugefügt. Die Reaktionsmischung wird danach bei 70 °C gehalten, bis der NCO-Gehalt praktisch auf Null gesunken ist. Dann wird 2-Butoxyethanol (204 g) zugegeben und das Ethylacetat über eine Kolonne bis zu einem Festkörper von 70 % abdestilliert.

Beispiel 12:

1000 g eines Harzes nach Beispiel 8 und 500 g nach Beispiel 7 werden gemischt und dann im Vakuum auf ca. 85 % Festkörper aufdestilliert. Dazu werden in der Wärme 45 mmol/100 g Festkörper Ameisensäure (50 %) gegeben und danach mit vollentsalztem Wasser auf ca. 33 % Fk verdünnt.

Beispiel 13:

Es werden 1050 g Harz nach Beispiel 7, 225 g nach Beispiel 10 und 130 g nach Beispiel 11 gemischt, mit 50 mmol/100 g Fk Essigsäure (100 %) versetzt und dann mit vollentsalztem Wasser auf ca. 20 % Fk verdünnt. Diesem Klarlack wird mit einer Ultrafiltrationseinrichtung 30 % seines Volumens Ultrafiltrat entzogen. Der Festkörper beträgt dann ca. 30 %.

## B. Herstellung der Bäder

Beispiel 14:

Es werden 515 g einer Dispersion nach Beispiel 13 mit 345 g vollentsalztem Wasser verdünnt. Zu dieser Mischung wird unter Rühren 140 g einer Pigmentpaste nach Beispiel 14 gegeben. Nach gründlichem Homogenisieren werden in diesem Lack entfettete Stahlbleche beschichtet und 30 min bei 180 °C eingebrannt. Es entstehen glatte KTL-Filme.

Beispiel 15:

Es werden 465 g einer Dispersion nach Beispiel 12 mit 400 g vollentsalztem Wasser verdünnt und danach mit 95 g einer Pigmentpaste nach Beispiel 5 versetzt. Das Beschichtungsbad wird mit vollentsalztem Wasser auf eine Fk von 19 % eingestellt. In dem entstehenden KTL-Bad werden Metallsubstrate beschichtet und danach eingebrannt. Die entstehenden Bäder sind stabil und geben übliche KTL-Filme.

Beispiel 16:

Es werden 550 g einer Dispersion nach Beispiel 9 mit 795 g vollentsalztem Wasser verdünnt und dann mit 155 g einer Paste nach Beispiel 6 versetzt. Das entstehende KTL-Bad ist stabil und zeigt die üblichen Beschichtungseigenschaften.

**Patentansprüche**

1. Verfahren zur Herstellung von wäßrigen Pigmentpasten ohne organisches Lösemittel oder mit geringem Gehalt an organischem Lösemittel, **dadurch gekenzeichnet**, daß ein oder mehrere wasserdispergierbare oder wasserlösliche Pigmentpastenharze auf der Basis eines Epoxidharzes mit einem Aromatenanteil (berechnet als Phenylengruppen) von 20 bis 70 Gew.-%, bezogen auf den Harzfestkörper, einem Zahlenmittel des Molekulargewichts ($\overline{M}$n) von 400 bis 10000, einer Hydroxylzahl von ≦ 150, einem Gehalt von mindestens einer Oxazolidingruppe pro Molekül und einem Gehalt an neutralisierbaren, nicht quarternisierten Aminogruppen, der nach Neutralisation mit Säure, die Wasserdispergierbarkeit oder Wasserlöslichkeit bedingt, mit einem Lösemittelgehalt von 0 bis 10 Gew.-%, bezogen auf das Epoxidharz, mit Säure zur Dispergierung oder Auflösung neutralisiert und anschließend mit Wasser versetzt werden, worauf die erhaltene Dispersion oder Lösung unter Rühren mit Pigmenten und/oder Füllstofen und/oder Katalysatoren und/oder lacküblichen Hilfsstoffen im Gewichtsverhältnis 1 : 0,5 bis 1 : 11 versetzt wird und Wasser auf einen Gesamtwassergehalt von 25 bis 75 Gew.-%, bezogen auf die wäßrigen Pigmentpasten, unter Erzielung der gewünschten Mahlviskosität zugesetzt und vermahlen wird.

2. Verfahren nach Anspruch 1, dadurch gekennzeichnet, daß ein Epoxidharz mit einem Aromatenanteil (berechnet als Phenylengruppen) von 25 bis 70 Gew.-% verwendet wird.

3. Verfahren nach Anspruch 1 oder 2, dadurch gekennzeichnet, daß mit einem Lösemittelgehalt von 0 bis 5 Gew.-%, bezogen auf das Epoxidharz, gearbeitet wird.

4. Verfahren nach einem der vorhergehenden Ansprüche, dadurch gekennzeichnet, daß die Neutralisation des Epoxidharzes mit 10 bis 300 mmol Säure auf 100 g Harzfestkörper durchgeführt wird.

5. Verfahren nach einem der vorhergehenden Ansprüche, dadurch gekennzeichnet, daß das wasserlösliche Pigmentpastenharz dadurch hergestellt wird, daß man
   a) ein aromatische Gruppen enthaltendes Epoxidharz mit einem Epoxidäquivalentgewicht von 200 - 1000 und mindestens einer freien Epoxygruppe pro Molekül in einem Lösungsmittel mit
   b) einem primär-tertiären Diamin in einer derartigen Menge umsetzt, daß 50 - 100 Mol.-% der freien Epoxygruppen reagieren,
   c) die stöchiometrisch überschüssigen Epoxygruppen mit primären und/oder sekundären Aminen umgesetzt werden,
   d) 80 bis 100 Mol.-% der sekundären Aminogruppen mit einer Carbonylverbindung zu Oxazolidinstruktur umgesetzt werden und
   e) das enthaltene Lösemittel auf einen Gehalt von unter 10 Gew.-%, bezogen auf den Harzfestkörper, entfernt wird.

6. Wäßrige Pigmentpaste erhalten nach dem Verfahren eines der Ansprüche 1 bis 5.

7. Wäßrige Pigmentpaste, ohne organisches Lösemittel oder mit geringem Gehalt an organischem Lösemittel, nach Anspruch 6, enthaltend:
   A) ein oder mehrere wasserdispergierbare oder wasserlösliche Pigmentpastenharze auf der Basis eines Epoxidharzes mit einem Aromatenanteil (berechnet als Phenylengruppen) von 20 bis 70 Gew.-%, bezogen auf den Harzfestkörper, einem Zahlenmittel des Molekulargewichts ($\overline{M}$n) von 400 bis 10000, einer Hydroxylzahl von ≦ 150, einem Gehalt von mindestens einer Oxazolidingruppe pro Molekül und einem Gehalt an durch Säure neutralisierten, nicht quarternisierten Aminogruppen, der die Wasserdispergierbarkeit oder Wasserlöslichkeit bedingt,
   B) Pigmente und/oder Füllstoffe und/oder lackübliche Hilfsstoffe, wobei die Komponenten A und B im Gewichtsverhältnis 1:0,5 bis 1:11 vorliegen, und der durch die Summe der Komponenten A und B bedingte Festkörperanteil der wäßrigen Paste 20 bis 75 Gew.-% beträgt,
   C) 0 bis 5 Gew.-% Lösemittel und
   D) 25 bis 75 Gew.-% Wasser, wobei sich die Prozentangaben der Komponenten C und D jeweils auf die genannte wäßrige Pigmentpaste beziehen.

8. Wäßrige Pigmentpaste nach Anspruch 6 oder 7, in der die Oxazolidingruppen des Pigmentpastenharzes und die neutralisierbaren Aminogruppen erhältlich sind durch Umsetzung von 50 - 100 % der freien Epoxygruppen eines mindestens eine Epoxygruppe pro Molekül enthaltenden Epoxidharzes mit einem primär-tertiären Diamin, Umsetzung der stöchiometrisch überschüssigen Epoxygruppen mit einem primären oder sekundären Amin und Umsetzung von 80 - 100 Mol-% der sekundären Aminogruppen mit einer Carbonylverbindung zu Oxazolidinstrukturen.

9.  Verwendung der wäßrigen Pigmentpasten nach einem der Ansprüche 6 bis 8 in wäßrigen Überzugsmitteln.

10. Verwendung nach Anspruch 9 in wäßrigen Überzugsmitteln zur kathodischen Elektrotauchlackierung.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | EP - A2 - 0 361 243 (VIANOVA KUNSTHARZ AKTIEN- GESELLSCHAFT) * Ansprüche * -- | 1,4,5, 7-10 | C 09 D 17/00 C 09 D 163/00 |
| D,X | EP - A2 - 0 183 025 (VIANOVA KUNSTHARZ AKTIEN- GESELLSCHAFT) * Ansprüche * -- | 1,5, 7-10 | |
| X | DE - C2 - 3 300 555 (VIANOVA KUNSTHARZ AG) * Ansprüche; Seite 4, Zeilen 39-44 * ---- | 1,5, 7-10 | |

RECHERCHIERTE
SACHGEBIETE (Int Cl⁵)

C 09 D
C 08 G

Der vorliegende Recherchenbericht wurde für alle Patentansprüche erstellt.

| Recherchenort | Abschlußdatum der Recherche | Prüfer |
|---|---|---|
| WIEN | 29-07-1991 | PAMMINGER |